# EUROPÄISCHE PATENTSCHRIFT

(11) **EP 1 936 405 B1**
(45) Veröffentlichungstag und Bekanntmachung des Hinweises auf die Patenterteilung: **21.07.2010**
(21) Anmeldenummer: 06126941.1
(22) Anmeldetag: 21.12.2006
(51) Int. Cl.: G01T 1/29

(54) **Vorrichtung und Verfahren zum Löschen einer Speicherleuchtstoffschicht und System mit einer solchen Vorrichtung und einem Detektor**
Device and method for erasing a storage phosphor layer and system with such a device and a detector
Dispositif et procédé destinés à effacer une couche d'enregistrement luminescente et système avec un tel dispositif et un détecteur

(43) Veröffentlichungstag der Anmeldung: 25.06.2008
(73) Patentinhaber: Agfa HealthCare NV, 2640 Mortsel (BE)
(72) Erfinder: Reiser, Georg, 80337 München (DE); Fasbender, Robert, 91054 Erlangen (DE)
(74) Vertreter: Linsmeier, Josef

(56) Entgegenhaltungen:
- EP-A1- 0 167 835
- WO-A-2006/050019
- DE-A1- 19 648 076
- JP-A- 2000 004 398
- US-A- 4 786 808
- US-A- 5 072 119
- US-A- 5 818 065

## Beschreibung

Die vorliegende Erfindung betrifft eine Vorrichtung sowie ein entsprechendes System und Verfahren zum Löschen einer Speicherleuchtstoffschicht gemäß dem Oberbegriff des Anspruchs 1, 12 bzw. 14.

Im Bereich der Computer-Radiografie (CR) wird für medizinische Zwecke von einem Objekt, beispielsweise einem Patienten oder einem Körperteil des Patienten, mittels Röntgenbestrahlung ein Bild erzeugt, das in einer Speicherleuchtstoffschicht als latentes Röntgenbild abgespeichert wird. Ein solches Röntgenbild enthält somit Bildinformationen über das Objekt. Zum Auslesen der in der Speicherleuchtstoffschicht abgespeicherten Bildinformationen wird die Speicherleuchtstoffschicht mittels einer Bestrahlungseinrichtung angeregt. Die Speicherleuchtstoffschicht emittiert aufgrund dieser Anregung Emissionsstrahlung, die eine Intensität entsprechend der Menge der in der Speicherleuchtstoffschicht abgespeicherten Bildinformationen des Röntgenbildes aufweist. Die von der Speicherleuchtstoffschicht ausgesandte Emissionsstrahlung wird von einem Detektor erfasst und in elektrische Signale gewandelt, die ein Abbild der Bildinformationen enthalten. Die elektrischen Signale werden weiterverarbeitet und die in der Speicherleuchtstoffschicht abgespeicherten Bildinformationen anschließend sichtbar gemacht. Die Bildinformationen können beispielsweise direkt auf einem Monitor dargestellt oder mittels eines speziell für Röntgenbilder verwendbaren Druckers auf einen fotografischen Röntgenfilm geschrieben werden.

Nach dem Auslesen der Röntgeninformationen aus der Speicherleuchtstoffschicht verbleiben in dieser Reste des latenten Röntgenbildes. Ferner können Rauschinformationen abgespeichert sein. Um die Speicherleuchtstoffschicht für weitere Röntgenaufnahmen verwenden zu können, wird sie daher gelöscht. Dazu wird eine Strahlungsquelle verwendet, die eine Löschstrahlung auf die Speicherleuchtstoffschicht ausgibt.

Üblicherweise wird eine Löschdosis der Löschstrahlung auf der Grundlage einer bei der Aufnahme des Röntgenbildes verwendeten Röntgendosis vor dem Auslesen der Bildinformationen oder vor dem anschließenden Löschen der Speicherleuchtstoffschicht manuell oder automatisch vorgegeben. Dabei kann ein gleichmäßiges und vollständiges Löschen von in der Speicherleuchtstoffschicht abgespeicherten Restinformationen nicht in allen Fällen gewährleistet werden. Dies gilt insbesondere in Fällen, in denen die Löschdosis irrtümlicherweise falsch eingestellt wurde oder in denen in Teilen der Speicherleuchtstoffschicht eine unerwartet große Menge an Bildinformationen des Röntgenbildes abgespeichert ist. Dies wiederum kann bei einer erneuten Röntgenaufnahme mittels der nicht vollständig gelöschten Speicherleuchtstoffschicht zu Verzerrungen und Verfälschungen bei dem Abspeichern des neuen Röntgenbildes, und insbesondere beim Auslesen des neuen Röntgenbildes aus der Speicherleuchtstoffschicht, führen.

Aus US 5,072,119 ist bekannt, aus dem während des Auslesens der Speicherleuchtstoffschicht mittels eines Photomultipliers erfassten Emissionslicht ein Maß für die bei der Aufnahme des Röntgenbildes verwendete Röntgendosis abzuleiten, aus welchem dann mittels vorab gespeicherter Informationen die jeweils erforderliche Menge des Löschlichts bestimmt wird.

Bei dem in EP 0 167 835 A1 beschriebenen Verfahren wird aus dem während des Auslesens der Speicherleuchtstoffschicht erhaltenen Ausgangssignal des Photomultipliers ein Maximalwert ermittelt, aus welchem unter Heranziehung einer zuvor festgelegten Beziehung die Bestrahlungszeit mit Löschlicht berechnet wird.

Aus US 4,786,808 ist bekannt, die auszulesende Fläche der Speicherleuchtstoffschicht in mehrere quer zur Transportrichtung der Speicherleuchtstoffschicht liegende Streifen einzuteilen und für jeden Streifen einen Maximalwert des jeweils erhaltenen Ausgangssignals des Photomultipliers zu bestimmen. Aus den Maximalwerten wird die in den jeweiligen Streifen noch vorhandene maximale Energiemenge berechnet, aus welcher die Bestrahlungsdosis mit Löschlicht berechnet wird.

Es ist die Aufgabe der vorliegenden Erfindung, eine besonders gute Bildqualität bei einem Abspeichern eines Röntgenbildes in einer Speicherteuchtstoffschicht, und insbesondere beim Auslesen von in der Speicherleuchtstoffschicht abgespeicherten Bildinformationen des Röntgenbildes, zu ermöglichen.

Diese Aufgabe wird durch die technische Lehre gemäß Anspruch 1, 12 oder 14 gelöst. Vorteilhafte Ausgestaltungen der Erfindung können den abhängigen Ansprüchen entnommen werden.

Die Steuereinrichtung der erfindungsgemäßen Vorrichtung ist so ausgestaltet, dass sie eine Löschdosis der Löschstrahlung zum Löschen der Speicherleuchtstoffschicht in Abhängigkeit von zuvor aus der Speicherleuchtstoffschicht ausgelesenen Bildinformationen eines in der Speicherleuchtstoffschicht abgespeicherten Röntgenbildes bestimmt.

Erfindungsgemäß ist darüber hinaus eine Antriebseinrichtung zum Erzeugen einer Relativbewegung zwischen der Speicherleuchtstoffschicht und dem Detektor vorhanden und mit der Steuereinrichtung verbunden. Ferner ist die Steuereinrichtung so ausgestaltet, dass sie zum Erzeugen von ersten Bildsignalen, die ausgelesene erste Bildinformationen des in der Speicherleuchtstoffschicht abgespeicherten Röntgenbildes repräsentieren, die Antriebseinrichtung zum Erzeugen einer ersten Relativbewegung ansteuert. Mittels der Antriebseinrichtung lässt sich die Relativbewegung vorteilhafterweise zuverlässig, sehr genau und insbesondere sehr gleichförmig durchführen. Das Ausführen der ersten Relativbewegung erfolgt insbesondere in eine Vorschubrichtung.

Die Steuereinrichtung ist ferner so ausgestaltet, dass sie zum Erzeugen von zweiten Bildsignalen, die ausgelesene zweite Bildinformationen des in der Speicherleuchtstoffschicht abgespeicherten Röntgenbildes repräsentieren, die Antriebseinrichtung zum Erzeugen einer zweiten Relativbewegung ansteuert. Dies ermöglicht vorteilhafterweise ein Heranziehen der zweiten Bildsignale zum Bestimmen der Löschdosis der Löschstrahlung.

Darüber hinaus ist die Steuereinrichtung so ausgestaltet, dass sie die ersten Bildsignale und/oder die zweiten Bildsignale einem lokalen Filtern unterzieht und die gegebenenfalls lokal gefilterten ersten Bildsignale und zweiten Bildsignale überlagert. Bei dem lokalen Filtern verändert die Steuereinrichtung Bildsignalwerte von Bildpunkten der ersten Bildsignale bzw. der zweiten Bildsignale in Abhängigkeit von Bildsignalwerten benachbarter Bildpunkte. Dieses lokale Filtern gewährleistet eine verbesserte Bildqualität. Das lokale Filtern kann insbesondere mit linearen Filteroperationen, wie z. B. einem Mittelwertfilter, durchgeführt werden. Dadurch wird vorteilhafterweise das Signal-Rausch-Verhältnis bei niedrigen Ortsfrequenzen erhöht. Ferner kann das lokale Filtern insbesondere mit nichtlinearen Filteroperationen, wie z. B. einem Medianfilter, durchgeführt werden. Dies gewährleistet vorteilhafterweise eine Verschärfung von Kanten im ausgelesenen Röntgenbild.

Das erfindungsgemäße System enthält die erfindungsgemäße Vorrichtung und einen Detektor zum Erfassen von Emissionsstrahlung, die die Speicherleuchtstoffschicht beim Auslesen von Bildinformationen ausgibt.

Bei dem erfindungsgemäßen Verfahren wird die Löschdosis der Löschstrahlung in Abhängigkeit von Bildinformationen des in der Speicherleuchtstoffschicht abgespeicherten Röntgenbildes bestimmt, wobei die Bildinformationen zuvor aus der Speicherleuchtstoffschicht ausgelesen wurden. Das erfindungsgemäße Verfahren zeichnet sich darüber hinaus dadurch aus, dass eine mit einer Steuereinrichtung verbundene Antriebseinrichtung eine Relativbewegung zwischen der Speicherleuchtstoffschicht und einem Detektor erzeugt und die Steuereinrichtung zum Erzeugen von ersten und zweiten Bildsignalen die Antriebseinrichtung zum Erzeugen einer ersten bzw. zweiten Relativbewegung ansteuert, wobei die ersten und zweiten Bildsignale erste bzw. zweite Bildinformationen des aus der Speicherleuchtstoffschicht jeweils ausgelesenen Röntgenbildes repräsentieren, und sie die ersten Bildsignale und/oder die zweiten Bildsignale einer lokalen Filterung unterzieht, bei welcher die Steuereinrichtung Bildsignalwerte von Bildpunkten der ersten Bildsignale bzw. der zweiten Bildsignale in Abhängigkeit von Bildsignalwerten benachbarter Bildpunkte verändert und die gegebenenfalls lokal gefilterten ersten Bildsignale und zweiten Bildsignale überlagert.

Aufgrund der vorliegenden Erfindung kann vorteilhafterweise ein besonders gleichmäßiges und vollständiges Löschen von in der Speicherleuchtstoffschicht nach dem Auslesen der Bildinformationen des Röntgenbildes verbliebener Restinformation gewährleistet werden. Dies wiederum gewährleistet, dass bei einem Aufnehmen eines neuen Röntgenbildes mit der Speicherleuchtstoffschicht die in der Speicherleuchtstoffschicht abgespeicherten Bildinformationen des Röntgenbildes sehr genau den Strukturen eines geröntgten Objekts, wie z. B. einem Körperteil eines Patienten, entsprechen. Verzerrungen und Verfälschungen durch in der Speicherleuchtstoffschicht vorhandene Restinformationen können vorteilhafterweise nahezu vollständig vermieden werden. Dadurch kann beim Auslesen der abgespeicherten Bildinformationen des Röntgenbildes eine sehr gute Bildqualität erreicht werden. Die Steuereinrichtung dient insbesondere zum Ansteuern der Strahlungsquelle, um die Löschdosis an der Strahlungsquelle einzustellen. Die Löschdosis ergibt sich aus der Intensität der Löschstrahlung und der Zeitdauer, in der die Löschstrahlung auf die Speicherleuchtstoffschicht wirkt. Die Löschdosis der Löschstrahlung wird von der Steuereinrichtung vorteilhafterweise automatisch bestimmt.

Die Strahlungsquelle umfasst eine Löschlampe, welche Löschstrahlung im Wesentlichen über die gesamte Breite der Speicherleuchtstoffschicht aussendet.

Alternativ oder zusätzlich umfasst die Strahlungsquelle eine Vielzahl von Lichtquellen, welche Löschstrahlung emittieren und vorzugsweise in einer oder mehreren sich über die Breite der Speicherleuchtstoffschicht erstreckenden Reihe bzw. Reihen angeordnet sind. Als Lichtquellen eignen sich insbesondere lichtemittierende Dioden (LEDs), da deren Verlustwärme im Vergleich zu Glühlampen oder dergleichen gering ist und dadurch eine unerwünschte Erwärmung der Vorrichtung und/oder der Speicherleuchtstoffschicht während des Löschens vermieden werden kann.

Im Falle einer aus einzelnen Lichtquellen zusammengesetzten Strahlungsquelle ist es möglich, die Lichtquellen einzeln anzusteuern, so dass die Intensität der von den einzelnen Lichtquellen emittierten Löschstrahlung individuell und in Abhängigkeit von zuvor aus der Speicherleuchtstoffschicht ausgelesenen Bildinformationen des in der Speicherleuchtstoffschicht abgespeicherten Röntgenbildes eingestellt werden kann. Auf dieser Weise ist es möglich, die Löschdosis in Abhängigkeit von dem zuvor ausgelesenen Röntgenbild lokal unterschiedlich hoch zu wählen.

In einer vorteilhaften Ausgestaltung der Erfindung ist die Steuereinrichtung so ausgestaltet, dass sie die aus der Speicherleuchtstoffschicht ausgelesenen Bildinformationen dahingehend auswertet, ob ein Detektor zum Erfassen von Emissionsstrahlung, die die Speicherleuchtstoffschicht beim Auslesen der Bildinformationen ausgibt, in einem Sättigungs- oder Übersteuerungszustand war. Die Steuereinrichtung bestimmt die Löschdosis dann in Abhängigkeit von diesem Auswerten der ausgelesenen Bildinformationen. Die Tatsache, ob der Detektor in dem Sättigungs- oder Übersteuerungszustand war, ist vorteilhafterweise auf einfache Weise schnell und zuverlässig feststellbar. Befand sich der Detektor in dem Sättigungs- oder Übersteuerungszustand kann insbesondere davon ausgegangen werden, dass eine relativ hohe Menge an Bildinformationen zumindest bereichsweise in der Speicherleuchtstoffschicht abgespeichert ist. Die Steuereinrichtung kann die Löschdosis somit in geeigneter Weise an diese relativ hohe Menge an Bildinformationen anpassen. Befindet sich der Detektor in dem Sättigungs- oder Übersteuerungszustand, dann kann er die von der Speicherleuchtstoffschicht ausgegebene Emissionsstrahlung mit den ausgelesenen Bildinformationen nicht vollständig erfassen. Insbesondere ist in diesem Fall die Aufnahmekapazität des Detektors, oder einzelner Detektorelemente des Detektors, vollständig ausgeschöpft, so dass er keine weitere Emissionsstrahlung aufnehmen kann. Es ist in diesem Fall somit möglich, dass der Detektor eine Menge von an wenigstens einer Stelle oder in einem Bereich der Speicherleuchtstoffschicht ausgelesenen Bildinformationen des Röntgenbildes nur teilweise erfasst. Die ausgelesenen Bildinformationen werden somit "abgeschnitten". Dieser Effekt wird auch "Clipping" genannt. Die Menge der erfassten Emissionsstrahlung entspricht nicht der Menge der von der Speicherleuchtstoffschicht ausgegebenen Emissionsstrahlung. Insbesondere wird vom Detektor keine Menge an Emissionsstrahlung entsprechend der in der Speicherleuchtstoffschicht abgespeicherten Bildinformationen erfasst.

In einer besonders bevorzugten Ausgestaltung der Erfindung ist die Steuereinrichtung so ausgestaltet, dass sie die ersten Bildsignale, welche die ausgelesenen ersten Bildinformationen repräsentieren, dahingehend auswertet, ob der Detektor beim Auslesen der ersten Bildinformationen zum Erzeugen der ersten Bildsignale in dem Sättigungs- oder Übersteuerungszustand war. Bereits diese ersten Bildsignale, welche die ausgelesenen ersten Bildinformationen repräsentieren, können eine gute Abschätzung der zum Löschen vorteilhafterweise einzusetzenden Löschdosis ermöglichen.

Besonders vorteilhaft ist die Steuereinrichtung so ausgestaltet, dass sie eine erste Löschdosis bestimmt, sofern das Auswerten der ersten Bildsignale ergibt, dass der Detektor beim Auslesen der ersten Bildinformationen zum Erzeugen der ersten Bildsignale nicht in dem Sättigungs- oder Übersteuerungszustand war. Diese erste Löschdosis kann relativ niedrig gewählt werden, da keine besonders große Menge an Emissionsstrahlung von der Speicherleuchtstoffschicht beim Auslesen der Bildinformationen ausgegeben wurde. In diesem Fall kann vorteilhafterweise auf ein Durchführen eines weiteren Auslesevorgangs zum Auslesen von abgespeicherter Bildinformationen des Röntgenbildes verzichtet werden. Das Auswerten der ersten Bildsignale ist für das Bestimmen der geeigneten Löschdosis vollkommen ausreichend. Das Löschen der Speicherleuchtstoffschicht kann somit schnell und zuverlässig erfolgen. Ferner ist der für die niedrige erste Löschdosis einzusetzende Energieaufwand zum Löschen gering.

In einem Beispiel werden die ersten Bildsignale anhand eines ersten Verarbeitungsverfahrens aus der erfassten ersten Bildinformation und die zweiten Bildsignale anhand eines zweiten Verarbeitungsverfahrens aus der erfassten zweiten Bildinformation abgeleitet, wobei sich das erste und zweite Verarbeitungsverfahren unterscheiden. Das erste und zweite Verarbeitungsverfahren unterscheiden sich hierbei insbesondere darin, dass sie die bei der Erfassung der ersten bzw. zweiten Bildinformation unterschiedlich hohen Intensitäten des in der Speicherleuchtstoffschicht angeregten Emissionslichts berücksichtigen. Diese Intensitätsunterschiede rühren daher, dass die Intensität des Emissionslichts aufgrund des sog. destruktiven Auslesens während der Erfassung der ersten Bildinformation bei der anschließenden Erfassung der zweiten Bildinformation kleiner ist.

Besonders bevorzugt ist die Steuereinrichtung so ausgestaltet, dass sie die zweiten Bildsignale, welche die ausgelesenen zweiten Bildinformationen repräsentieren, auswertet und eine zweite Löschdosis bestimmt, die größer als die erste Löschdosis ist, sofern das Auswerten der zweiten Bildsignale ergibt, dass der Detektor beim Auslesen der ersten Bildinformationen zum Erzeugen der ersten Bildsignale in dem Sättigungs- oder Übersteuerungszustand und beim Auslesen der zweiten Bildinformationen zum Erzeugen der zweiten Bildsignale nicht in dem Sättigungs- oder Übersteuerungszustand war. Die zweite Löschdosis kann eine mittlere Höhe haben. Dies ermöglicht weiterhin ein schnelles und zuverlässiges Löschen und begrenzt den für die mittlere zweite Löschdosis einzusetzenden Energieaufwand.

In einer vorteilhaften Ausgestaltung der Erfindung ist die Steuereinrichtung so ausgestaltet, dass sie eine dritte Löschdosis bestimmt, die größer als die zweite Löschdosis ist, sofern das Auswerten der zweiten Bildsignale ergibt, dass der Detektor beim Auslesen der zweiten Bildinformationen zum Erzeugen der zweiten Bildsignale in dem Sättigungs- oder Übersteuerungszustand war. In diesem Fall emittierte die Speicherleuchtstoffschicht beim Auslesen eine besonders große Menge an Emissionsstrahlung. Es ist daher davon auszugehen, dass eine große Menge an Röntgenstrahlung beim Aufnehmen des Röntgenbildes in die Speicherleuchtstoffschicht eingedrungen ist. Ebenso ist davon auszugehen, dass nach dem Auslesen der zweiten Bildinformationen eine relativ große Menge an weiteren Bildinformationen des Röntgenbildes in der Speicherleuchtstoffschicht abgespeichert ist. Diese relativ große Menge an weiteren Bildinformationen ist dann als zu löschende Restinformation zu betrachten, für deren Löschen somit eine hohe Löschdosis eingesetzt wird. Dies gewährleistet ein zuverlässiges Löschen der Speicherleuchtstoffschicht.

Vorzugsweise ist eine Richtung der ersten Relativbewegung einer Richtung der zweiten Relativbewegung entgegengesetzt. Das Auslesen der ersten Bildinformationen kann somit vorteilhafterweise auf einem Hinweg oder einem Hinlauf und das Auslesen der zweiten Bildinformationen auf einem Rückweg oder einem Rücklauf erfolgen.

In einer weiteren vorteilhaften Ausgestaltung ist die Steuereinrichtung so ausgestaltet, dass sie die ersten Bildsignale und/oder die zweiten Bildsignale mittels einer Fourier-Transformation in den Frequenzraum transformiert und im Frequenzraum einem weiteren Verarbeiten unterzieht. Dadurch ist es möglich, die Bildsignale frequenzabhängig in geeigneter Weise zu verarbeiten. Dies ermöglicht eine besonders hohe Bildqualität des aus der Speicherleuchtstoffschicht ausgelesenen Röntgenbildes. Als weiteres Verarbeiten können die fourier-transformierten ersten und zweiten Bildsignale bereits im Frequenzraum überlagert und gegebenenfalls skaliert werden. Es ist insbesondere möglich, als ein weiteres Verarbeiten eine frequenzabhängige Addition der fourier-transformierten ersten und zweiten Bildsignale vorzunehmen, wobei vorzugsweise niederfrequente Signalanteile bei der Addition höher gewichtet werden als höherfrequente Signalanteile. Dies gewährleistet eine besonders gute Bildqualität. Besonders vorteilhaft werden nur die zweiten Bildsignale mittels der Fourier-Transformation in den Frequenzraum transformiert und im Frequenzraum weiter verarbeitet. Dies begrenzt den Aufwand und gewährleistet dennoch eine sehr hohe Bildqualität.

In einer besonders bevorzugten Ausgestaltung der Erfindung umfasst das weitere Verarbeiten ein Filtern, insbesondere ein Filtern mit einem Tiefpass. Durch das Filtern können Stör- und Rauschanteile der Bildsignale entfernt werden, wodurch eine sehr gute Bildqualität des aus der Speicherleuchtstoffschicht ausgelesenen Röntgenbildes gewährleistet werden kann. Bei dem vorzugsweisen Filtern mit dem Tiefpass können insbesondere hochfrequente Anteile der Bildsignale im Fourierspektrum unterdrückt oder zumindest abgeschwächt werden. Dabei wird vorteilhafterweise das Signal-Rausch-Verhältnis erhöht.

Besonders vorteilhaft ist die Steuereinrichtung so ausgestaltet, dass sie die fourier-transformierten und verarbeiteten ersten Bildsignale und/oder zweiten Bildsignale in den Ortsraum zurücktransformiert und die ersten Bildsignale und zweiten Bildsignale überlagert. Das Überlagern der ersten Bildsignale mit den zweiten Bildsignalen erfolgt insbesondere punktweise und ermöglicht vorteilhafterweise eine besonders genau Wiedergabe der tatsächlich in der Speicherleuchtstoffschicht abgespeicherten Bildinformationen des Röntgenbildes.

Besonders bevorzugt ist die Steuereinrichtung so ausgestaltet, dass sie die ausgelesene erste Bildinformationen repräsentierenden ersten Bildsignale dahingehend auswertet, ob sie wenigstens eine Stelle oder einen Bereich aufweisen, in dem der Detektor beim Auslesen der ersten Bildinformationen zum Erzeugen dieses wenigstens einen Bereiches der ersten Bildsignale in dem Sättigungs- oder Übersteuerungszustand war, und wenigstens eine Stelle oder einen Bereich der die ausgelesene zweite Bildinformationen repräsentierenden zweiten Bildsignale dazu verwendet, den wenigstens einen Bereich der ersten Bildsignale zu ersetzen. Auf diese Weise kann eine Stelle oder ein Bereich im ausgelesenen Röntgenbild, die durch die ersten Bildsignale aufgrund des "Clipping"-Effektes nicht vollständig erfasst werden konnte, zumindest annähernd mittels der zweiten Bildsignale hergeleitet werden. Dadurch ist vorteilhafterweise eine wirklichkeitsgetreue Wiedergabe des in der Speicherleuchtstoffschicht abgespeicherten Röntgenbildes möglich. Das Ersetzen der Stelle oder des Bereichs der ersten Bildsignale durch die Stelle oder den Bereich der zweiten Bildsignale wird auch als "Patch"-Funktion bezeichnet.

Weitere Vorteile der Erfindung ergeben sich aus der folgenden Beschreibung von Ausführungsbeispielen, wobei Bezug auf die beigefügten Zeichnungen genommen wird. Es zeigen:
- Fig. 1: eine schematische, perspektivische Darstellung eines Ausführungsbeispiels einer erfindungsgemäßen Vorrichtung zum Löschen von in einer Speicherleuchtstoffschicht abgespeicherten Restinformationen, wobei die Vorrichtung als Radiografiemodul ausgestaltet ist, das auch zum Auslesen von in der Speicherleuchtstoffschicht abgespeicherten Bildinformationen ausgestaltet ist,
- Fig. 2: eine weitere schematische Darstellung eines Aufbaus des Radiografiemoduls nach Fig. 1,
- Fig. 3A-3C: schematische, nicht normierte Darstellungen eines ersten und zweiten Bildsignals, einer Filterung des fourier-transformierten zweiten Bildsignals und einer Überlagerung des ersten und des gefilterten, rücktransformierten zweiten Bildsignals,
- Fig. 4A, 4B: schematische Darstellungen zum Verdeutlichen von einem lokalen Filtern von Bildsignalen,
- Fig. 5A, 5B: schematische Darstellungen eines ersten und zweiten Bildsignals zum Verdeutlichen einer Patch-Funktion, mit der ein durch den Clipping-Effekt abgeschnittener Teil des Signalverlaufs des ersten Bildsignals mittels eines Teils des Signalverlaufs des zweiten Bildsignals ersetzt wird, und
- Fig. 6A-6C: schematische Darstellungen von in einem oder in zwei Auslesevorgängen ausgelesenen Bildinformationen von Röntgenbildern mit Clipping-Effekten, deren Vorhandensein zum Bestimmen einer Löschdosis verwendet wird.

Im Folgenden werden, sofern nicht anders angegeben, für gleiche oder gleichwirkende Elemente gleiche Bezugszeichen verwendet.

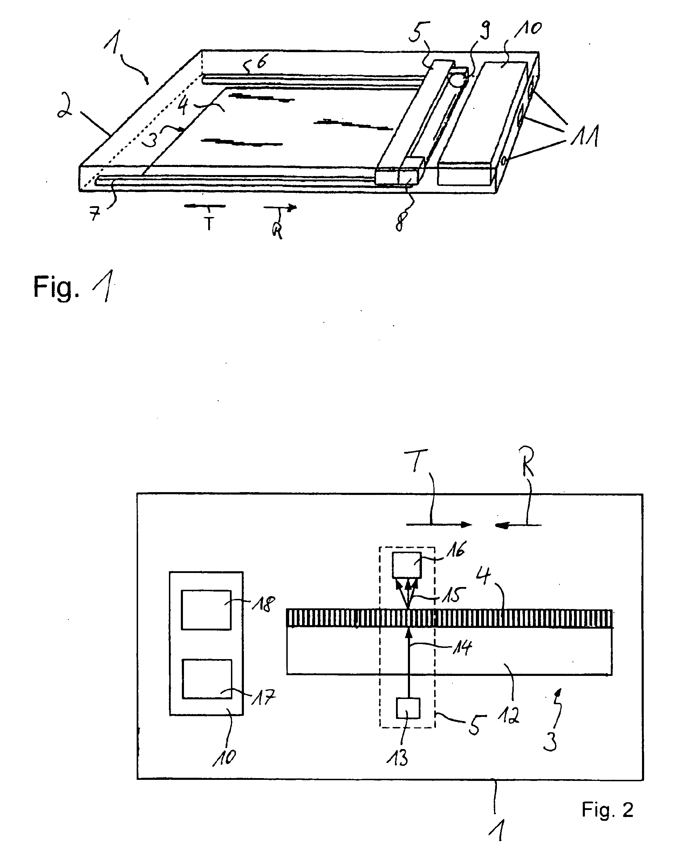

Fig. 1 zeigt eine schematische, perspektivische Darstellung eines Ausführungsbeispiels einer erfindungsgemäßen Vorrichtung zum Löschen von in einer Speicherleuchtstoffschicht abgespeicherten Restinformationen eines Röntgenbildes. Die Vorrichtung ist hier als Radiografiemodul 1 ausgestaltet, das zudem als Auslesevorrichtung zum Auslesen von in der Speicherleuchtstoffschicht abgespeicherten Bildinformationen des Röntgenbildes dient. Die zu löschenden Restinformationen sind diejenigen Informationen, die nach dem Auslesen der Bildinformationen in der Speicherleuchtstoffschicht verbleiben. Nach dem Löschen der Restinformationen ist die Speicherleuchtstoffschicht für eine neue Röntgenaufnahme einsetzbar. Das Radiografiemodul 1 ist hier vorzugsweise wie eine Röntgenkassette ausgeführt und handhabbar. D. h., es ist im Wesentlichen tragbar und kann zur Aufnahme von Röntgenbildern in unterschiedliche Röntgensysteme, wie z. B. einen Röntgenstand oder Röntgentisch, eingeführt oder integriert werden. Dazu ist das Radiografiemodul 1 schwenkbar. Zum Auslesen des in der Speicherleuchtstoffschicht abgespeicherten Röntgenbildes kann das Radiografiemodul 1 im Röntgensystem verbleiben und muss nicht - wie eine herkömmliche Röntgenkassette - aus dem Röntgensystem entnommen und einer separaten Auslesestation zugeführt werden.

Das Radiografiemodul 1 umfasst ein Gehäuse 2, in welchem eine Speicherleuchtstoffplatte 3 angeordnet ist. Die Speicherleuchtstoffplatte 3 weist eine Speicherleuchtstoffschicht 4 und eine Trägerschicht auf, auf der die Speicherleuchtstoffschicht 4 aufgebracht ist (Fig. 2). Die Speicherleuchtstoffschicht 4 ist hier die obere Schicht der Speicherleuchtstoffplatte 3. Die Speicherleuchtstoffplatte 3 ist in dem Gehäuse 2 des Radiografiemoduls 1 ortsfest angeordnet, d. h. die Speicherleuchtstoffplatte 3 ist über geeignete Verbindungselemente fest mit dem Gehäuse 2 verbunden. Die Verbindung mit dem Gehäuse 2 kann hierbei starr oder auch schwingend sein, z. B. mittels geeigneter Aufhängungselemente, um etwaige äußere Stöße auf das Gehäuse 2 und deren Übertragung auf die Speicherleuchtstoffplatte 3 zu dämpfen.

Das Radiografiemodul 1 enthält einen Lesekopf 5 zum Auslesen der Bildinformationen des Röntgenbildes aus der Speicherleuchtstoffschicht 4. Der Lesekopf 5 ist in dem Gehäuse 2 beweglich gelagert. Dazu sind im Bereich der beiden Längsseiten der Speicherleuchtstoffplatte 3 Führungen 6 und 7 angeordnet, die dem Lesekopf 5 als Lager, vorzugsweise in Form von Luftlagern, und Führung dienen. Zum Auslesen der Röntgeninformationen wird der Lesekopf 5 durch einen geeigneten Antrieb 8, z. B. einen Linearantrieb mit einem sehr genau arbeitenden Getriebe, angetrieben und in eine erste Transportrichtung T in eine Hinlaufrichtung und in eine zweite Transportrichtung R in eine Rücklaufrichtung über die Speicherleuchtstoffplatte 3 bewegt. Zwischen der Speicherleuchtstoffschicht 4 und dem Lesekopf 5 findet somit zum Auslesen der abgespeicherten Bildinformationen eine erste Relativbewegung in die erste Transportrichtung T und eine zweite Relativbewegung in die zweite Transportrichtung R statt. Das Antreiben des Lesekopfes 5, und damit das Erzeugen und Ausführen der ersten und zweiten Relativbewegung zwischen der Speicherleuchtstoffschicht 4 und dem Lesekopf 5, erfolgt kontinuierlich und linear mit einer sehr konstanten Transportgeschwindigkeit. Im vorliegenden Ausführungsbeispiel ist der Lesekopf 5 entlang der Speicherleuchtstoffplatte 3 bewegbar, während die Speicherleuchtstoffplatte 3 im Gehäuse 2 fest angeordnet ist. Es ist allerdings ebenso möglich, den Lesekopf 5 im Gehäuse ortsfest anzuordnen und die Speicherleuchtstoffplatte 3 am Lesekopf 5 vorbei zu bewegen.

Zum Löschen der Speicherleuchtstoffschicht 4 ist eine Löschlampe 9 vorgesehen, die ebenfalls von dem Antrieb 8 angetrieben und über die Speicherleuchtstoffschicht 4 bewegt werden kann. Die Löschlampe 9 dient dazu, die Restinformationen in der Speicherleuchtstoffschicht 4, die nach dem Auslesen noch vorhanden sind, vor der nachfolgenden Röntgenaufnahme zu löschen.

Es ist des Weiteren eine Steuereinrichtung 10 vorgesehen, die den Auslese- und Löschvorgang sowie etwaige Signalverarbeitungsprozesse steuert. An der Steuereinrichtung 10 sind verschiedene Schnittstellen 11 vorhanden, die zum Übertragen von Energie, ggf. Luft, Steuersignalen und/oder Bildsignalen zum und vom Radiografiemodul 1 erforderlich sind.

Fig. 2 zeigt eine weitere schematische Darstellung eines Aufbaus des Radiografiemoduls 1 nach Fig. 1. Das Radiografiemodul 1 ist hier in einer Seitenansicht gezeigt. Dargestellt ist die Speicherleuchtstoffplatte 3, die eine Trägerschicht 12 und die Speicherleuchtstoffschicht 4 aufweist. Die Speicherleuchtstoffschicht 4 setzt sich vorzugsweise aus einer Vielzahl von Phosphorpartikeln zusammen, die zum Speichern der Bildinformationen des Röntgenbildes dienen. Die Trägerschicht 12 kann ein Laminat sein, das aus verschiedenen Schichten und Materialien zusammengesetzt ist. Die Trägerschicht 12 ist hier eine transparente Trägerschicht, die für Strahlung teilweise durchlässig ist.

Der Lesekopf 5 enthält eine Bestrahlungseinrichtung 13, die zum Bestrahlen der Speicherleuchtstoffschicht 4 mit einer Anregungsstrahlung 14 dient. Als Bestrahlungseinrichtung 13 wird hier eine Laserdiodenzeile eingesetzt werden, die eine Vielzahl von nebeneinander angeordneten Laserdioden enthält. Mit dieser Laserdiodenzeile wird eine Zeile der Speicherleuchtstoffschicht 4 gleichzeitig bestrahlt und angeregt. Es ist aber ebenso möglich, eine anders ausgestaltete Bestrahlungseinrichtung 13 zu verwenden.

Aufgrund des Anregens der Speicherleuchtstoffschicht 4 mittels der Anregungsstrahlung 14 emittiert die Speicherleuchtstoffschicht 4 eine Emissionsstrahlung 15, deren Intensität von den in der Speicherleuchtstoffschicht 4 abgespeicherten Bildinformationen abhängt. Zum Erfassen der emittierten Emissionsstrahlung enthält der Lesekopf 5 einen Detektor 16. Der Detektor 16 weist hier einen Zeilendetektor auf, der eine sogenannte "charge-coupled-device" (CCD)-Zeile enthält. Die CCD-Zeile weist eine Vielzahl von parallel in einer Linie nebeneinander angeordneten Fotodetektoren auf, die Detektorelemente darstellen. Die Anzahl der nebeneinander angeordneten Detektorelemente bestimmt die Auflösung, und damit die Anzahl der Punkte oder Pixel, des Detektors 16 in Zeilenrichtung. Mittels des Detektors 16 kann eine fotoelektrische Wandlung der empfangenen Emissionsstrahlung 15 durchgeführt werden. Der Detektor 16 wird in einem vorgegebenen Zeitabstand ausgelesen. Alternativ kann der Detektor 16 statt der CCD-Zeile beispielsweise einen Lichtleiter mit einem angeschlossenen Photomultiplier aufweisen. Zwischen der Bestrahlungseinrichtung 13 und dem Detektor 16 besteht eine feste Verbindung, so dass die Abbildung der in der Speicherleuchtstoffschicht 4 gespeicherten Bildinformationen, d. h. die Anregung der Speicherleuchtstoffschicht 4 und der Empfang der aufgrund der Anregung emittierten Emissionsstrahlung 15, genau aufeinander abgestimmt sind und auch während des eigentlichen Auslesevorgangs immer eine exakte Zuordnung gewährleistet ist.

Die Bestrahlungseinrichtung 13 ist im vorliegenden Ausführungsbeispiel unterhalb und der Detektor 16 oberhalb der Speicherleuchtstoffplatte 3 angeordnet. Die Bestrahlungseinrichtung 13 ist der Trägerschicht 12 und der Detektor 16 der Speicherleuchtstoffschicht 4 unmittelbar benachbart. Die Anregungsstrahlung 14 kann dabei in die transparente Trägerschicht 12 eindringen und von unten zur Speicherleuchtstoffschicht 4 gelangen.

Die Steuereinrichtung 10 enthält ein erstes Steuermittel 17 zum Steuern des Radiografiemoduls 1 und seiner Komponenten. Das erste Steuermittel 17 steuert daher insbesondere die Funktionen der Bestrahlungseinrichtung 13 und des Detektors 16 sowie des Antriebs 8. Das erste Steuermittel 17 ist mit diesen Komponenten des Radiografiemoduls 1 verbunden. Ferner enthält die Steuereinrichtung 10 ein zweites Steuermittel 18 zum Verarbeiten der aus der Speicherleuchtstoffschicht 12 ausgelesenen Bildinformationen. Das zweite Steuermittel 18 ist insbesondere mit dem Detektor 16 verbunden, um die von diesem erzeugten elektrischen Signale, die ein Abbild der in der Speicherleuchtstoffschicht 4 abgespeicherten Bildinformationen des Röntgenbildes enthalten, zu verarbeiten. Die beiden Steuermittel 17 und 18 können auch durch ein einziges Steuermittel realisiert sein.

Der Lesekopf 5, d. h. sowohl die Bestrahlungseinrichtung 13 als auch der Detektor 16, wird ausgehend von seiner Ruheposition mittels des Antriebs 8 mit einer Transportgeschwindigkeit entlang der gesamten Länge der Speicherleuchtstoffplatte 3 zunächst in die erste Transportrichtung T bewegt. Dabei werden erste Bildinformationen des in der Speicherleuchtstoffschicht 4 abgespeicherten Röntgenbildes aufgrund der von dem Detektor 16 empfangenen Emissionsstrahlung 15 ausgelesen. Die ersten Bildinformationen werden von den einzelnen Detektorelementen des Detektors 16 in elektrische erste Bildsignale gewandelt und dem zweiten Steuermittel 18 zugeleitet. Nach dem Auslesen der ersten Bildinformationen kann der Lesekopf 5 gegebenenfalls anschließend mittels des Antriebs 8 entlang der gesamten Länge der Speicherleuchtstoffplatte 3 in die zweite Transportrichtung R zurück in die Ruheposition bewegt werden. Dabei werden zweite Bildinformationen des in der Speicherleuchtstoffschicht 4 abgespeicherten Röntgenbildes aufgrund der von dem Detektor 16 empfangenen Emissionsstrahlung 15 ausgelesen. Die zweiten Bildinformationen werden von den einzelnen Detektorelementen des Detektors 16 in elektrische zweite Bildsignale gewandelt und dem zweiten Steuermittel 18 zugeleitet. Ob nach dem Auslesen der ersten Bildinformationen zusätzlich das Auslesen der zweiten Bildinformationen durchgeführt wird, kann das zweite Steuermittel 18 vorzugsweise aufgrund einer Auswertung der ersten Bildsignale entscheiden. Die Größe der Pixel des ausgelesenen Röntgenbildes, und damit dessen Auflösung, ergibt sich, in die erste Transportrichtung T und die zweite Transportrichtung R betrachtet, u. a. aus der Transportgeschwindigkeit und dem vorgegebenen Zeitabstand zum Auslesen des Detektors 16. Das Ausführen der Relativbewegungen in die erste Transportrichtung T und die zweite Transportrichtung R wird auch als Ausführen von Subscans bezeichnet. Im vorliegenden Ausführungsbeispiel wird der Lesekopf 5 zum Auslesen der zweiten Bildinformationen in die der ersten Transportrichtung T entgegengesetzte zweite Transportrichtung R bewegt. Es allerdings ebenfalls möglich, den Lesekopf 5 nach dem Auslesen der ersten Bildinformationen zunächst in seine Ruheposition zurückzufahren und erst dann das Auslesen der zweiten Bildinformationen durchzuführen, indem der Lesekopf 5 erneut in die erste Transportrichtung T entlang der Speicherleuchtstoffschicht 4 bewegt wird.

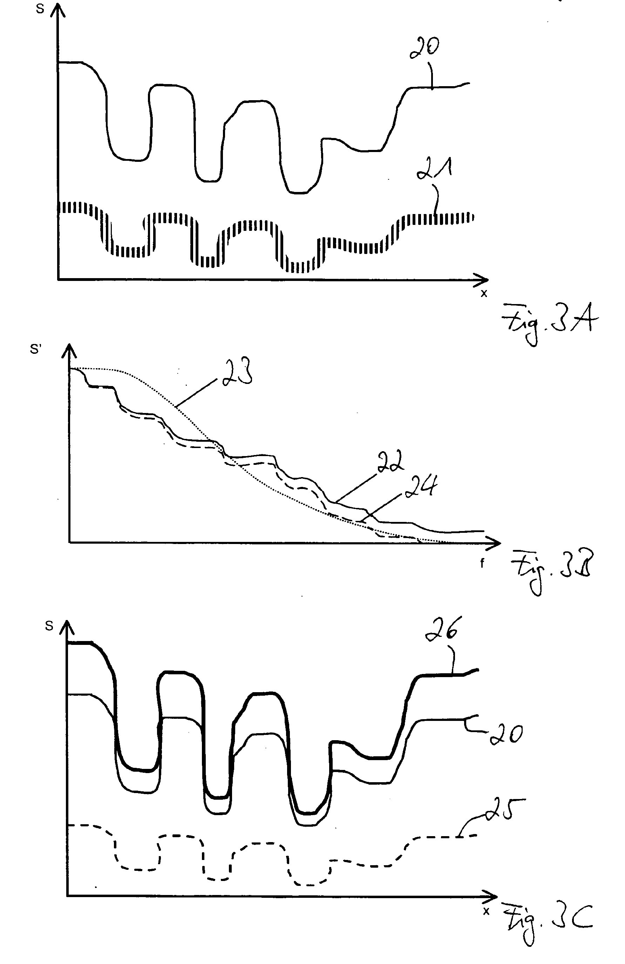

Fig. 3A zeigt beispielhaft schematische, nicht normierte Darstellungen eines ersten Bildsignals 20 und eines zweiten Bildsignals 21. Aufgetragen sind in einem Koordinatensystem die Bildsignale 20, 21 (gekennzeichnet durch ein S an der Ordinate) über einen von dem Lesekopf 5 beim Auslesen der Bildinformationen entlang der Längserstreckung der Speicherleuchtstoffschicht 4 zurückgelegten Ausleseweg (gekennzeichnet durch ein x an der Abszisse). Die beiden Bildsignale 20, 21 sind hier also in einem Ortsraum dargestellt.

Das erste Bildsignal 20 wurde von einem der Detektorelemente des Detektors 16 beim Transportieren des Lesekopfes 5 in die erste Transportrichtung T erzeugt und repräsentiert die von der Speicherleuchtstoffschicht 4 beim Transportieren des Lesekopfes 5 in die erste Transportrichtung T ausgegebene Emissionsstrahlung 15, die von dem einen der Detektorelemente des Detektors 16 erfasst und aufgenommen wurde. Das erste Bildsignal 20 repräsentiert somit im Wesentlichen diejenigen ersten Bildinformationen, die in der Speicherleuchtstoffschicht 4 entlang des von dem einen der Detektorelemente des Detektors 16 beim Auslesen in die erste Transportrichtung T zurückgelegten Ausleseweges abgespeichert sind.

Das zweite Bildsignal 21 wurde von dem einen der Detektorelemente des Detektors 16 beim Transportieren des Lesekopfes 5 in die zweite Transportrichtung R erzeugt und repräsentiert die von der Speicherleuchtstoffschicht 4 beim Transportieren des Lesekopfes 5 in die zweite Transportrichtung R ausgegebene Emissionsstrahlung 15, die von dem einen der Detektorelemente des Detektors 16 erfasst und aufgenommen wurde. Das zweite Bildsignal 21 repräsentiert somit im Wesentlichen diejenigen zweiten Bildinformationen, die in der Speicherleuchtstoffschicht 4 entlang des von dem einen der Detektorelemente des Detektors 16 beim Auslesen in die zweite Transportrichtung R zurückgelegten Ausleseweges abgespeichert sind.

Der Höhe des ersten Bildsignals 20 ist wesentlich größer als derjenige des zweiten Bildsignals 21. Dies kommt daher, dass beim ersten Auslesen der abgespeicherten Bildinformationen eine wesentlich größere Menge an Bildinformationen in der Speicherleuchtstoffschicht 4 abgespeicherte ist, und daher eine wesentlich größere Menge an Emissionsstrahlung von der Speicherleuchtstoffschicht 4 ausgegeben wird, als beim zweiten Auslesen. Das Signal-Rausch-Verhältnis ist im ersten Bildsignal 20 wesentlich besser als im zweiten Bildsignal 21. Insbesondere in dem zweiten Bildsignal 21 sind somit hochfrequente Verzerrungen enthalten, die hier schematisch durch vertikal verlaufende Ausschläge des Bildsignals 21 angedeutet sind.

Zur Verbesserung der Bildqualität des aus der Speicherleuchtstoffschicht 4 bei den beiden Auslesevorgängen in die erste und die entgegengesetzte zweite Transportrichtung T, R ausgelesenen Bildinformationen des Röntgenbildes wird das zweite Bildsignal 21 im vorliegenden Ausführungsbeispiel einer Fourier-Transformation unterzogen.

Dies ist in Fig. 3B dargestellt, welche fourier-transformierte Signal- und Filterverläufe aufgetragen über einer Frequenz f zeigt. Die Signal- und Filterverläufe sind somit in einem Frequenzraum dargestellt. Fig. 3B zeigt eine schematische, nicht normierte Darstellung eines fourier-transformierten zweiten Bildsignals 22, das einem Ergebnis der Fourier-Transformation des zweiten Bildsignals 21 entspricht. Fig. 3B zeigt ferner eine schematische, nicht normierte Darstellung eines Verlaufs 23 eines Filters zum Filtern des zweiten Bildsignals 22. Der Filterverlauf 23 entspricht im Wesentlichen einem Verlauf eines Tiefpasses. Fig. 3B zeigt des Weiteren eine schematische, nicht normierte Darstellung eines gefilterten, fourier-transformierten zweiten Bildsignals 24, das einem Ergebnis einer Filterung des fourier-transformierten zweiten Bildsignals 22 mittels des Filters mit dem Filterverlauf 23 entspricht.

Fig. 3C zeigt eine schematische, nicht normierte Darstellung eines in den Ortsraum rücktransformierten, gefilterten zweiten Bildsignals 25, das dem gefilterten, fourier-transformierten zweiten Bildsignal 24 entspricht, das in den Ortsraum rücktransformiert wurde. Dargestellt ist ferner das erste Bildsignal 20 und ein Bildsignalverlauf 26 einer Überlagerung des ersten Bildsignals 20 und des rücktransformierten, gefilterten zweiten Bildsignals 25. Die Überlagerung entspricht hier im Wesentlichen einer Addition des ersten Bildsignals 20 und des rücktransformierten, gefilterten zweiten Bildsignals 25.

Es ist möglich, zusätzlich zu dem zweiten Bildsignal 21 auch das erste Bildsignal 20 der Fourier-Transformation und der anschließenden Filterung mit dem Filterverlauf 23 zu unterziehen. Es ist ebenso möglich, das fourier-transformierte, und gegebenenfalls gefilterte, erste Bildsignal und zweite Bildsignal bereits im Frequenzraum zu überlagern und das überlagerte Gesamtbildsignal dann in den Ortsraum zurück zu transformieren.

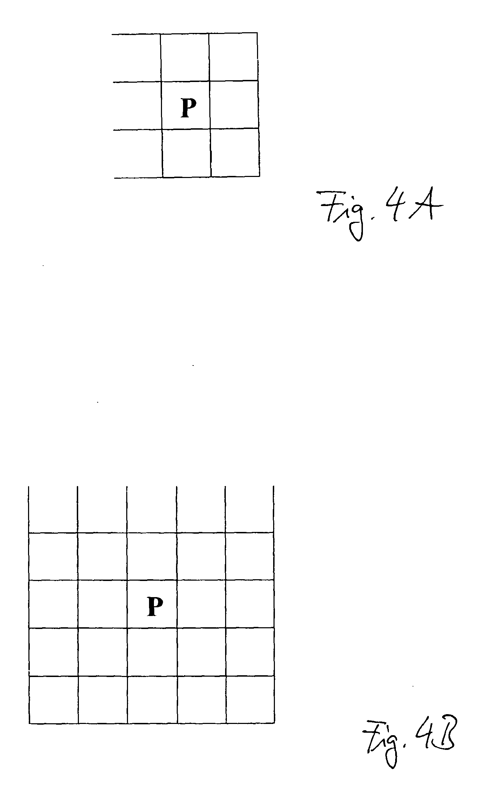

Fig. 4A und 4B zeigen schematische Darstellungen zum Verdeutlichen eines lokalen Filterns von Bildsignalen. Das lokale Filtern wird auch als ein Durchführen von sog. Kern- oder Kerneloperationen bezeichnet.

Bei diesem lokalen Filtern wird ein Signalwert eines Pixels des Bildsignals in Abhängigkeit von Signalwerten von Pixeln in seiner Nachbarschaft manipuliert. Üblicherweise wird die lokale Nachbarschaft des Bildpunktes in einer 3x3 oder 5x5 Umgebung zur Berechnung des neuen Signalwerts verwendet.

Fig. 4A zeigt beispielhaft einen Bildpunkt P und seine benachbarte 3x3 Umgebung. Fig. 4B zeigt beispielhaft den Bildpunkt P und seine benachbarte 5x5 Umgebung. Im vorliegenden Ausführungsbeispiel werden insbesondere Signalwerte der zweiten Bildsignale lokal gefiltert, um vorteilhafterweise das Signal-Rausch-Verhältnis zu verbessern. Als lokale Filter können verschiedene Filtertypen eingesetzt werden. Dies sind insbesondere lineare Filter, wie z. B. Mittelwertfilter, mit denen vorteilhafterweise das Signal-Rausch-Verhältnis bei niedrigen Ortsfrequenzen erhöht werden kann. Es können auch nichtlineare Filter eingesetzt werden, wie z. B. Medianfilter, mit denen vorteilhafterweise eine Verschärfung von Kanten im ausgelesenen Röntgenbild durchgeführt werden kann.

Beim Erfassen der Emissionsstrahlung 15, die die Speicherleuchtstoffschicht 4 beim Auslesen der Bildinformationen des abgespeicherten Röntgenbildes ausgibt, kann der Detektor 16, oder können vielmehr eines oder mehrere der Detektorelemente des Detektors 16, in einen Sättigungs- oder Übersteuerungszustand kommen. Befindet sich der Detektor 16, oder einzelne Detektorelemente, in diesem Sättigungs- oder Übersteuerungszustand, dann kann er die von der Speicherleuchtstoffschicht 4 ausgegebene Emissionsstrahlung 15 mit den ausgelesenen Bildinformationen nicht mehr erfassen. Insbesondere die Aufnahmekapazität des Detektors 16, oder einzelner Detektorelemente, ist vollständig ausgeschöpft, so dass er keine weitere Emissionsstrahlung aufnehmen kann. Die Detektorelemente des Detektors 16 müssen in diesem Fall erst wieder ausgelesen werden, um erneut Emissionsstrahlung 15 aufnehmen zu können. Es ist somit möglich, dass der Detektor 16 eine Menge von an wenigstens einer Stelle oder in einem Bereich der Speicherleuchtstoffschicht 4 ausgelesenen Bildinformationen des Röntgenbildes nur teilweise erfasst. Die ausgelesenen Bildinformationen werden somit "abgeschnitten". Dieser Effekt wird "Clipping" genannt. Die Menge der erfassten Emissionsstrahlung 15 entspricht dabei nicht der Menge der von der Speicherleuchtstoffschicht 4 ausgegebenen Emissionsstrahlung 15.

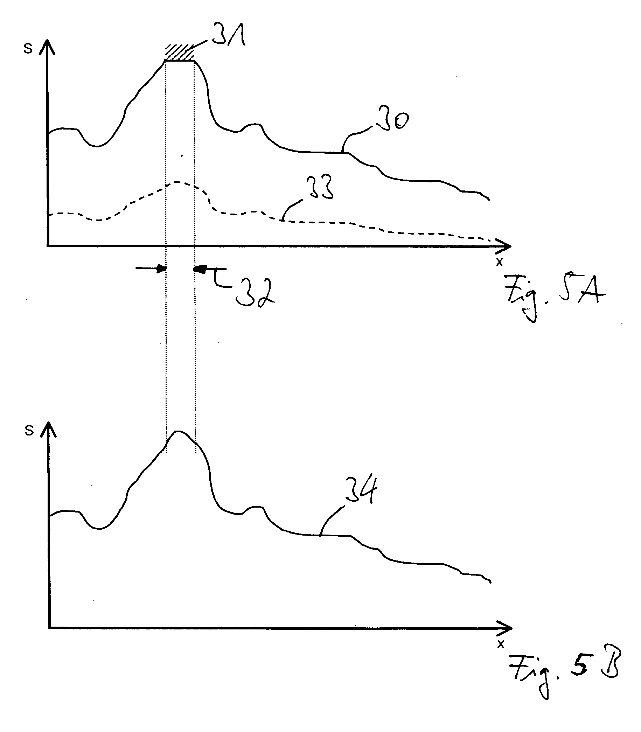

Fig. 5A zeigt ein Beispiel eines ersten Bildsignals 30, das von einem der Detektorelemente des Detektors 16 beim Transportieren des Lesekopfes 5 in die erste Transportrichtung T erzeugt wurde. Das erste Bildsignal 30 repräsentiert die von der Speicherleuchtstoffschicht 4 beim Transportieren des Lesekopfes 5 in die erste Transportrichtung T ausgegebene Emissionsstrahlung 15, die von dem einen der Detektorelemente des Detektors 16 erfasst wurde. Das Bildsignal 30 weist einen Bereich 31 auf, in dem der Signalverlauf "abgeschnitten" ist, d. h. konstant auf einem maximalen Wert verharrt. Dies bedeutet, dass beim Auslesen der ersten Bildinformationen entlang eines Teils des Ausleseweges, durch den eine Breite 32 des Bereichs 31 in x-Richtung festgelegt ist, bei dem Detektorelement der "Clipping"-Effekt auftrat. Die von der Speicherleuchtstoffschicht 4 ausgegebene Emissionsstrahlung 15 war so groß, dass das Detektorelement einen Teil dieser Emissionsstrahlung 15 nicht mehr aufnehmen konnte.

Fig. 5A zeigt ferner ein zweites Bildsignal 33, das von dem einem der Detektorelemente des Detektors 16 beim Transportieren des Lesekopfes 5 in die zweite Transportrichtung R erzeugt wurde. Dem Verlauf des zweiten Bildsignals 33 lässt sich für die Breite 32 entnehmen, dass die tatsächlich von der Speicherleuchtstoffschicht 4 beim Auslesen der ersten Bildinformationen ausgegebene Emissionsstrahlung 15 nicht durch den Verlauf des ersten Bildsignals 30 im Bereich 31 wiedergegeben wird. Der Verlauf des zweiten Bildsignals 33 weist nämlich in der Breite 32 keinen konstanten Verlauf auf. Im vorliegenden Ausführungsbeispiel ist die Steuereinrichtung 10 so ausgestaltet, dass sie das erste Bildsignal 30, das von dem einen der Detektorelemente ausgelesene erste Bildinformationen repräsentiert, auswertet. Bei diesem Auswerten untersucht die Steuereinrichtung 10 den Verlauf des ersten Bildsignals nach Stellen oder Bereichen, in denen der "Clipping"-Effekt auftrat, d. h. in denen das Detektorelement beim Auslesen der ersten Bildinformationen in dem Sättigungs- oder Übersteuerungszustand war. Findet die Steuereinrichtung 10 eine solche Stelle oder einen solchen Bereich, dann verwendet sie das zweite Bildsignal, das ausgelesene zweite Bildinformationen repräsentiert, dazu, die "Clipping"-Stelle oder den "Clipping"-Bereich des ersten Bildsignals zu ersetzen.

Dies ist in Fig. 5B dargestellt, die ein erstes Bildsignal 34 zeigt, dessen Signalverlauf in der Breite 32 aus dem in der Breite 32 geltenden Bereich des zweiten Bildsignals 33 hergeleitet ist. Das Bildsignal 34 entspricht somit bis auf den Signalverlauf in der Breite 32 dem Bildsignal 30. Der Signalverlauf des Bildsignals 30 wurde im "Clipping"-Bereich 31 ersetzt, um den Signalverlauf des Bildsignals 34 zu erhalten. Diese Verfahrensweise wird als "Patch"-Funktion bezeichnet. Auf diese "Patch"-Funktion kann eine tatsächliche Menge von ersten Bildinformation an einer Stelle oder in einem Bereich des ausgelesenen Röntgenbildes, die durch die ersten Bildsignale aufgrund des "Clipping"-Effektes nicht vollständig erfasst werden konnte, zumindest annähernd mittels der zweiten Bildsignale hergeleitet werden. Dadurch ist vorteilhafterweise eine wirklichkeitsgetreue Wiedergabe des in der Speicherleuchtstoffschicht abgespeicherten Röntgenbildes möglich.

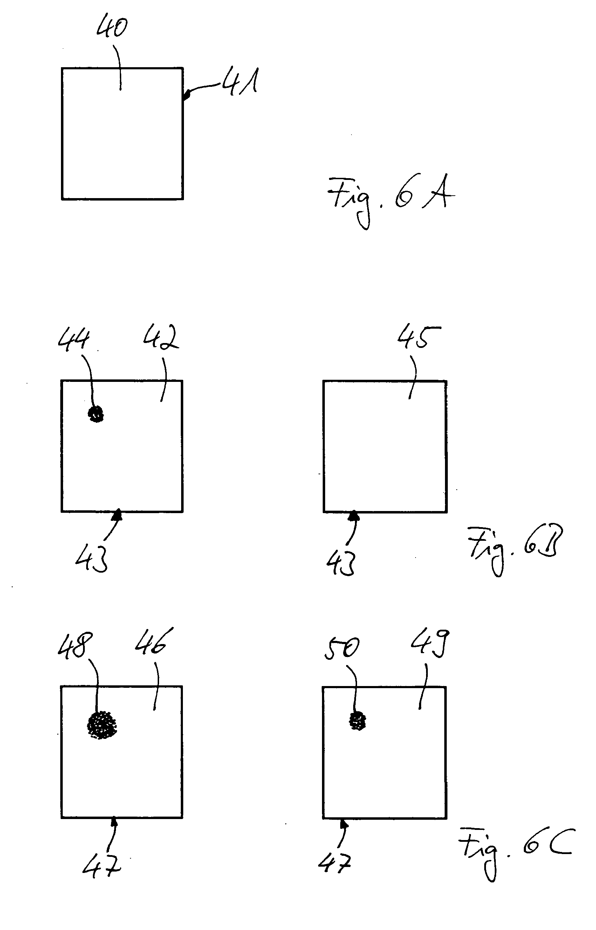

Fig. 6A-6C zeigen schematische Darstellungen von in einem oder in zwei Auslesevorgängen ausgelesenen ersten bzw. ersten und zweiten Bildinformationen von Röntgenbildern. Fig. 6A zeigt andeutungsweise ausgelesene erste Bildinformationen 40 eines in der Speicherleuchtstoffschicht 4 abgespeicherten Röntgenbildes 41. Die ersten Bildinformationen 40 wurden mit einem ersten Auslesevorgang durch das Transportieren des Lesekopfes 5 über die Speicherleuchtstoffschicht 4 in die erste Transportrichtung T gewonnen. In dem Beispiel nach Fig. 6A wurde ein zweiter Auslesevorgang zum Auslesen von zweiten Bildinformationen des Röntgenbildes 41 durch das Transportieren des Lesekopfes 5 über die Speicherleuchtstoffschicht 4 in die zweite Transportrichtung R nicht durchgeführt.

Fig. 6B zeigt auf der linken Seite andeutungsweise ausgelesene erste Bildinformationen 42 eines in der Speicherleuchtstoffschicht 4 abgespeicherten Röntgenbildes 43. Die ersten Bildinformationen 42 wurden mit einem ersten Auslesevorgang durch das Transportieren des Lesekopfes 5 über die Speicherleuchtstoffschicht 4 in die erste Transportrichtung T gewonnen. Beim Auslesen der ersten Bildinformationen 42 trat in dem Detektor 16 ein Sättigungs- oder Übersteuerungszustand auf, so dass ein "Clipping"-Bereich 44 in den ersten Bildinformationen 42 entstand. Fig. 6B zeigt ferner auf der rechten Seite andeutungsweise ausgelesene zweite Bildinformationen 45 des in der Speicherleuchtstoffschicht 4 abgespeicherten Röntgenbildes 43. Die zweiten Bildinformationen 45 wurden mit einem zweiten Auslesevorgang durch das Transportieren des Lesekopfes 5 über die Speicherleuchtstoffschicht 4 in die zweite Transportrichtung R gewonnen. In den zweiten Bildinformationen 45 tritt kein "Clipping"-Bereich mehr auf.

Fig. 6C zeigt auf der linken Seite andeutungsweise ausgelesene erste Bildinformationen 46 eines in der Speicherleuchtstoffschicht 4 abgespeicherten Röntgenbildes 47. Die ersten Bildinformationen 46 wurden mit einem ersten Auslesevorgang durch das Transportieren des Lesekopfes 5 über die Speicherleuchtstoffschicht 4 in die erste Transportrichtung T gewonnen. Beim Auslesen der ersten Bildinformationen 46 trat in dem Detektor 16 ebenfalls ein Sättigungs- oder Übersteuerungszustand auf, so dass ein "Clipping"-Bereich 48 in den ersten Bildinformationen 46 entstand. Fig. 6C zeigt ferner auf der rechten Seite andeutungsweise ausgelesene zweite Bildinformationen 49 des in der Speicherleuchtstoffschicht 4 abgespeicherten Röntgenbildes 47. Die zweiten Bildinformationen 49 wurden mit einem zweiten Auslesevorgang durch das Transportieren des Lesekopfes 5 über die Speicherleuchtstoffschicht 4 in die zweite Transportrichtung R gewonnen. Beim Auslesen der zweiten Bildinformationen 49 trat in dem Detektor 16 weiterhin ein Sättigungs- oder Übersteuerungszustand auf, so dass ein "Clipping"-Bereich 50 in den zweiten Bildinformationen 49 entstand.

In den vorliegenden Ausführungsbeispielen nach Fig. 6A-6C wird das Auftreten des "Clipping"-Effektes und das daraus resultierende Vorhandensein der "Clipping"-Bereiche 44, 48 und 50 jeweils zum Bestimmen einer Löschdosis verwendet, die zum Löschen der Speicherleuchtstoffschicht 4 mittels der Löschlampe 9 nach dem Auslesen der Röntgenbilder 41, 43 bzw. 47 eingesetzt wird. Die Löschdosis bestimmt sich aus der Intensität der von der Löschlampe 9 ausgegebenen Löschstrahlung und der Zeitdauer, mit der die Löschlampe 9 die Speicherleuchtstoffschicht 4 mit der Löschstrahlung bestrahlt.

Die Steuereinrichtung 10 ermittelt dabei das Vorhandensein der "Clipping"-Bereiche 44, 48 und 50. Das Vorhandensein der "Clipping"-Bereiche in den ausgelesenen ersten und/oder den zweiten Bildinformationen wird hier als Maß dazu verwendet, die Menge der nach dem Auslesen der Röntgenbilder in der Speicherleuchtstoffschicht 4 verbliebenen und zu löschenden Restinformationen abzuschätzen.

Im Ausführungsbeispiel nach Fig. 6A ist in den ersten Bildinformationen 40 kein "Clipping"-Bereich enthalten. Die Steuereinrichtung 10 stellt daher zum Löschen der Speicherleuchtstoffschicht 4 nach dem Auslesen des Röntgenbildes 41 eine niedrige erste Löschdosis bei der Löschlampe 9 ein. Die Steuereinrichtung 10 kann in diesem Fall so ausgestaltet sein, dass sie selbständig auf der Grundlage der ersten Bildinformationen 40, und ggf. einem Vorhandensein eines "Clipping"-Bereiches, entscheidet, ob ein zweiter Auslesevorgang zum Auslesen von zweiten Bildinformationen durchgeführt wird. Im Regelfall wird der zweite Auslesevorgang nicht ausgeführt, sofern die ersten Bildinformationen keinen "Clipping"-Bereich aufweisen.

Im Ausführungsbeispiel nach Fig. 6B ist in den ersten Bildinformationen 42 der "Clipping"-Bereich 44 enthalten. In den zweiten Bildinformationen 45 dagegen ist kein "Clipping"-Bereich vorhanden. Die Steuereinrichtung 10 stellt daher zum Löschen der Speicherleuchtstoffschicht 4 nach dem Auslesen des Röntgenbildes 43 vorzugsweise eine mittlere zweite Löschdosis bei der Löschlampe 9 ein, welche größer ist als die erste Löschdosis. Alternativ kann in diesem Fall die zweite Löschdosis aber auch gleich der ersten Löschdosis sein, da durch den zweiten Auslesevorgang aufgrund des sog. destruktiven Auslesens ein Teil der noch vorhandenen Bildinformationen gelöscht werden, was dazu führt, dass die Löschdosis zum Löschen der nach dem zweiten Auslesevorgang noch verbliebenen Bildinformationen gegenüber der ersten Löschdosis nicht erhöht werden muss.

Im Ausführungsbeispiel nach Fig. 6C ist in den ersten Bildinformationen 46 der "Clipping"-Bereich 48 enthalten. In den zweiten Bildinformationen 49 ist ebenfalls ein "Clipping"-Bereich, der "Clipping"-Bereich 50, vorhanden. Die Steuereinrichtung 10 stellt daher zum Löschen der Speicherleuchtstoffschicht 4 nach dem Auslesen des Röntgenbildes 47 eine hohe Löschdosis bei der Löschlampe 9 ein, welche vorzugsweise größer ist als die zweite Löschdosis.

## Patentansprüche

1. Vorrichtung (1) zum Löschen einer Speicherleuchtstoffschicht (4) mittels einer Löschstrahlung, wobei die Vorrichtung (1)
- eine Strahlungsquelle (9) zum Erzeugen und Aussenden der Löschstrahlung umfasst und
- eine Steuereinrichtung (10) aufweist, die so ausgestaltet ist, dass sie eine Löschdosis der Löschstrahlung zum Löschen der Speicherleuchtstoffschicht (4) in Abhängigkeit von aus der Speicherleuchtstoffschicht (4) ausgelesenen Bildinformationen (40; 42, 45; 46, 49) eines in der Speicherleuchtstoffschicht (4) abgespeicherten Röntgenbildes (41; 43; 47) bestimmt, **dadurch gekennzeichnet, dass**
eine Antriebseinrichtung (8) zum Erzeugen einer Relativbewegung zwischen der Speicherleuchtstoffschicht (4) und einem Detektor (16) vorhanden und mit der Steuereinrichtung (10) verbunden ist und die Steuereinrichtung (10) so ausgestaltet ist, dass sie zum Erzeugen von ersten und zweiten Bildsignalen die Antriebseinrichtung (8) zum Erzeugen einer ersten bzw. zweiten Relativbewegung ansteuert, wobei die ersten und zweiten Bildsignale erste bzw. zweite Bildinformationen des aus der Speicherleuchtstoffschicht (4) jeweils ausgelesenen Röntgenbildes repräsentieren, und sie die ersten Bildsignale und/oder die zweiten Bildsignale einer lokalen Filterung unterzieht, bei welcher die Steuereinrichtung (10) Bildsignalwerte von Bildpunkten der ersten Bildsignale bzw. der zweiten Bildsignale in Abhängigkeit von Bildsignalwerten benachbarter Bildpunkte verändert, und die gegebenenfalls lokal gefilterten ersten Bildsignale und zweiten Bildsignale überlagert.

2. Vorrichtung nach Anspruch 1, **dadurch gekennzeichnet, dass** die Steuereinrichtung (10) so ausgestaltet ist, dass sie die aus der Speicherleuchtstoffschicht (4) ausgelesenen Bildinformationen (40; 42, 45; 46, 49) dahingehend auswertet, ob der Detektor (16) zum Erfassen von Emissionsstrahlung (15), welche die Speicherleuchtstoffschicht (4) beim Auslesen der Bildinformationen (40; 42, 45; 46, 49) ausgibt, in einem Sättigungs- oder Übersteuerungszustand war, und dass sie die Löschdosis in Abhängigkeit von dieser Auswertung bestimmt.

3. Vorrichtung nach Anspruch 2, **dadurch gekennzeichnet, dass** die Steuereinrichtung (10) so ausgestaltet ist, dass sie die ersten Bildsignale dahingehend auswertet, ob der Detektor (16) beim Auslesen der ersten Bildinformationen zum Erzeugen der ersten Bildsignale in dem Sättigungs- oder Übersteuerungszustand war.

4. Vorrichtung nach Anspruch 3, **dadurch gekennzeichnet, dass** die Steuereinrichtung (10) so ausgestaltet ist, dass sie eine erste Löschdosis bestimmt, wenn die Überprüfung der ersten Bildsignale ergibt, dass der Detektor (16) beim Auslesen der ersten Bildinformationen (40) zum Erzeugen der ersten Bildsignale nicht in dem Sättigungs- oder Übersteuerungszustand war.

5. Vorrichtung nach Anspruch 3 oder 4, **dadurch gekennzeichnet, dass** die Steuereinrichtung (10) so ausgestaltet ist, dass sie die zweiten Bildsignale auswertet und eine zweite Löschdosis bestimmt, die größer oder gleich der ersten Löschdosis ist, wenn die Auswertung der zweiten Bildsignale ergibt, dass der Detektor (16) beim Auslesen der ersten Bildinformationen (42; 46) zum Erzeugen der ersten Bildsignale in dem Sättigungs- oder Übersteuerungszustand und beim Auslesen der zweiten Bildinformationen (45; 49) zum Erzeugen der zweiten Bildsignale nicht in dem Sättigungs- oder Übersteuerungszustand war.

6. Vorrichtung nach Anspruch 5, **dadurch gekennzeichnet, dass** die Steuereinrichtung (10) so ausgestaltet ist, dass sie eine dritte Löschdosis bestimmt, die größer als die zweite Löschdosis ist, wenn die Auswertung der zweiten Bildsignale ergibt, dass der Detektor (16) beim Auslesen der zweiten Bildinformationen (45; 49) zum Erzeugen der zweiten Bildsignale in dem Sättigungs- oder Übersteuerungszustand war.

7. Vorrichtung nach einem der Ansprüche 1 bis 6, **dadurch gekennzeichnet, dass** eine Richtung (T) der ersten Relativbewegung einer Richtung (R) der zweiten Relativbewegung entgegengesetzt ist.

8. Vorrichtung nach einem der Ansprüche 1 bis 7, **dadurch gekennzeichnet, dass** die Steuereinrichtung (10) so ausgestaltet ist, dass sie die ersten Bildsignale und/oder die zweiten Bildsignale mittels einer Fourier-Transformation in einen Frequenzraum transformiert und in dem Frequenzraum einer weiteren Verarbeitung unterzieht.

9. Vorrichtung nach Anspruch 8, **dadurch gekennzeichnet, dass** die weitere Verarbeitung eine Filterung, insbesondere eine Filterung mit einem Tiefpass, umfasst.

10. Vorrichtung nach Anspruch 8 oder 9, **dadurch gekennzeichnet, dass** die Steuereinrichtung (10) so ausgestaltet ist, dass sie die fourier-transformierten und verarbeiteten ersten Bildsignale und/oder zweiten Bildsignale in den Ortsraum zurück transformiert und die ersten Bildsignale und zweiten Bildsignale überlagert.

11. Vorrichtung nach einem der Ansprüche 1 bis 10, **dadurch gekennzeichnet, dass** die Steuereinrichtung (10) so ausgestaltet ist, dass sie die ersten Bildsignale dahingehend auswertet, ob sie wenigstens einen Bereich aufweisen, in dem der Detektor (16) beim Auslesen der ersten Bildinformationen (40; 42; 46) zum Erzeugen dieses wenigstens einen Bereiches der ersten Bildsignale in dem Sättigungs- oder Übersteuerungszustand war, und wenigstens einen Bereich der zweiten Bildsignale dazu verwendet, den wenigstens einen Bereich der ersten Bildsignale zu ersetzen.

12. System mit einer Vorrichtung (1) nach einem der vorhergehenden Ansprüche und einem Detektor (16) zum Erfassen von Emissionsstrahlung (15), die die Speicherleuchtstoffschicht (4) beim Auslesen der Bildinformationen ausgibt.

13. System nach Anspruch 12, **dadurch gekennzeichnet, dass** eine Speicherleuchtstoffschicht (4) vorhanden ist.

14. Verfahren zum Löschen einer Speicherleuchtstoffschicht (4) mittels einer Löschstrahlung, bei dem
- von einer Strahlungsquelle (9) die Löschstrahlung erzeugt und ausgesendet wird und
- eine Löschdosis der Löschstrahlung in Abhängigkeit von Bildinformationen (40; 42, 45; 46, 49) eines in der Speicherleuchtstoffschicht (4) abgespeicherten Röntgenbildes (41; 43; 47) bestimmt wird, wobei die Bildinformationen (40; 42, 45; 46, 49) zuvor aus der Speicherleuchtstoffschicht (4) ausgelesen wurden, **dadurch gekennzeichnet, dass**
eine mit einer Steuereinrichtung (10) verbundene Antriebseinrichtung (8) eine Relativbewegung zwischen der Speicherleuchtstoffschicht (4) und einem Detektor (16) erzeugt und die Steuereinrichtung (10) zum Erzeugen von ersten und zweiten Bildsignalen die Antriebseinrichtung (8) zum Erzeugen einer ersten bzw. zweiten Relativbewegung ansteuert, wobei die ersten und zweiten Bildsignale erste bzw. zweite Bildinformationen des aus der Speicherleuchtstoffschicht (4) jeweils ausgelesenen Röntgenbildes repräsentieren, und sie die ersten Bildsignale und/oder die zweiten Bildsignale einer lokalen Filterung unterzieht, bei welcher die Steuereinrichtung (10) Bildsignalwerte von Bildpunkten der ersten Bildsignale bzw. der zweiten Bildsignale in Abhängigkeit von Bildsignalwerten benachbarter Bildpunkte verändert und die gegebenenfalls lokal gefilterten ersten Bildsignale und zweiten Bildsignale überlagert.

## Claims

1. An apparatus (1) for erasing a storage phosphor layer (4) by means of erasing radiation, the apparatus (1)
- comprising a radiation source (9) for generating and emitting the erasing radiation, and
- having a control device (10) which is designed such that it determines an erasing dose of erasing radiation in order to erase the storage phosphor layer (4) dependently upon image information (40; 42, 45; 46, 49) from an X-ray image (41; 43; 47) stored in the storage phosphor layer (4) read out from the storage phosphor layer (4), **characterised in that**
a drive device (8) for generating a relative movement between the storage phosphor layer (4) and a detector (16) is provided and is connected to the control device (10), and the control device (10) is designed such that it controls the drive device (8) in order to generate a first and second relative movement in order to generate a first and second image signal, the first and second image signals representing first and second image information from the X-ray image respectively read out from the storage phosphor layer (4), and it subjects the first image signals and/or the second image signals to local filtering with which the control device (10) changes image signal values from pixels of the first image signals and the second image signals dependently upon image signal values of adjacent pixels, and overlays the optionally locally filtered first image signals and second image signals.

2. The apparatus according to Claim 1, **characterised in that** the control device (10) is designed such that it evaluates the image information (40; 42, 45; 46, 49) read out from the storage phosphor layer (4) to the effect whether the detector (16) for detecting emission radiation (15) which the storage phosphor layer (4) emits when reading out the image information (40; 42, 45; 46,49) was in a saturation or overload state, and that it determines the erasing dose dependently upon this evaluation.

3. The apparatus according to Claim 2, **characterised in that** the control device (10) is designed such that it evaluates the first image signals to the effect whether when reading out the first image information in order to generate the first image signals the detector (16) was in the saturation or overload state.

4. The apparatus according to Claim 3, **characterised in that** the control device (10) is designed such that it determines a first erasing dose when the examination of the first image signals shows that when reading out the first image information (40) in order to generate the first image signals the detector (16) was not in the saturation or overload state.

5. The apparatus according to Claim 3 or 4, **characterised in that** the control device (10) is designed such that it evaluates the second image signals and determines a second erasing dose which is greater than or equal to the first erasing dose when the evaluation of the second image signals shows that when reading out the first image information (42; 46) in order to generate the first image signals the detector (16) was in the saturation or overload state, and when reading out the second image information (45; 49) in order to generate the second image signals the detector (16) was not in the saturation or overload state.

6. The apparatus according to Claim 5, **characterised in that** the control device (10) is designed such that it determines a third erasing dose which is greater than the second erasing dose when the evaluation of the second image signals shows that when reading out the second pieces of image information (45; 49) in order to generate the second image signals the detector (16) was in the saturation or overload state.

7. The apparatus according to any of Claims 1 to 6, **characterised in that** a direction (T) of the first relative movement opposes a direction (R) of the second relative movement.

8. The apparatus according to any of Claims 1 to 7, **characterised in that** the control device (10) is designed such that it transforms the first image signals and/or the second image signals by means of a Fourier Transform into a frequency domain, and in the frequency domain subjects them to further processing.

9. The apparatus according to Claim 8, **characterised in that** the further processing comprises filtering, in particular filtering with a low pass.

10. The apparatus according to Claim 8 or 9, **characterised in that** the control device (10) is designed such that it transforms the Fourier-transformed and processed first image signals and/or second image signals back into the local domain, and overlays the first image signals and second image signals.

11. The apparatus according to any of Claims 1 to 10, **characterised in that** the control device (10) is designed such that it evaluates the first image signals to the effect whether they have at least one range in which when reading out the first image information (40; 42; 46) in order to generate this at least one range of first image signals the detector (16) was in the saturation or overload state, and at least one range of second image signals is used to replace the at least one range of first image signals.

12. A system having an apparatus (1) according to any of the preceding claims and a detector (16) for detecting emission radiation (15) which the storage phosphor layer (4) emits when reading out the image information.

13. The system according to Claim 12, **characterised in that** a storage phosphor layer (4) is provided.

14. A method for erasing a storage phosphor layer (4) by means of erasing radiation, wherein
- the erasing radiation is generated and emitted by a radiation source (9), and
- an erasing dose of erasing radiation is determined dependently upon image information (40; 42, 45; 46, 49) from an X-ray image (41; 43; 47) stored in the storage phosphor layer (4), the image information (40; 42, 45; 46, 49) previously being read out from the storage phosphor layer (4), **characterised in that**
a drive device (8) connected to a control device (10) generates a relative movement between the storage phosphor layer (4) and a detector (16), the control device (10) controls the drive device (8) in order to generate a first and second relative movement in order to generate first and second image signals, the first and second image signals representing first and second image information from the X-ray image respectively read out from the storage phosphor layer (4), and it subjects the first image signals and/or the second image signals to local filtering with which the control device (10) changes image signal values from pixels of the first image signals and the second image signals dependently upon image signal values of adjacent pixels and overlays the optionally locally filtered first image signals and second image signals.

## Revendications

1. Dispositif (1) d'effacement d'une couche d'enregistrement luminescente (4) au moyen d'un rayonnement d'effacement, dans lequel le dispositif (1)
- comporte une source de rayonnement (9) destinée à produire et à émettre le rayonnement d'effacement, et
- présente un dispositif de commande (10) conçu pour déterminer une dose d'effacement du rayonnement d'effacement permettant d'effacer la couche d'enregistrement luminescente (4) en fonction d'informations d'image (40 ; 42, 45 ; 46, 49), lues à partir de la couche d'enregistrement luminescente (4), relatives à une image radiographique (41 ; 43 ; 47) enregistrée dans la couche d'enregistrement luminescente (4), **caractérisé en ce qu'**il est prévu un dispositif d'entraînement (8) relié au dispositif de commande (10) et destiné à produire un mouvement relatif entre la couche d'enregistrement luminescente (4) et un détecteur (16), et **en ce que** le dispositif de commande (10) est conçu de manière à commander le dispositif d'entraînement (8) destiné à produire un premier ou second mouvement relatif en vue de produire des premiers et seconds signaux d'image, les premiers et seconds signaux d'image représentant des premières et secondes informations d'image relatives à l'image radiographique respectivement lue à partir de la couche d'enregistrement luminescente (4), et de manière à soumettre les premiers signaux d'image et/ou les seconds signaux d'image à un filtrage local moyennant lequel le dispositif de commande (10) modifie des valeurs de signaux d'image de points d'image des premiers signaux d'image ou des seconds signaux d'image en fonction des valeurs de signaux d'image de points d'image voisins, et superpose les premiers signaux d'image et seconds signaux d'image qui, le cas échéant, ont subi un filtrage local.

2. Dispositif selon la revendication 1, **caractérisé en ce que** le dispositif de commande (10) est conçu de manière à exploiter les informations d'image (40 ; 42, 45 ; 46, 49) lues à partir de la couche d'enregistrement luminescente (4) pour savoir si le détecteur (16), destiné à détecter le rayonnement d'émission (15) émis par la couche d'enregistrement luminescente (4) au cours de la lecture des informations d'image (40 ; 42, 45 ; 46, 49), était dans un état de saturation ou de surcharge, et de manière à déterminer la dose d'effacement en fonction de cette exploitation.

3. Dispositif selon la revendication 2, **caractérisé en ce que** le dispositif de commande (10) est conçu de manière à exploiter les premiers signaux d'image pour savoir si le détecteur (16) était dans l'état de saturation ou de surcharge au cours de la lecture des premières informations d'image visant à produire les premiers signaux d'image.

4. Dispositif selon la revendication 3, **caractérisé en ce que** le dispositif de commande (10) est conçu de manière à déterminer une première dose d'effacement lorsque la vérification des premiers signaux d'image indique que le détecteur (16) n'était pas dans l'état de saturation ou de surcharge lors de la lecture des premières informations d'image (40) visant à produire les premiers signaux d'image.

5. Dispositif selon la revendication 3 ou 4, **caractérisé en ce que** le dispositif de commande (10) est conçu de manière à exploiter les seconds signaux d'image et à déterminer une deuxième dose d'effacement, supérieure ou égale à la première dose d'effacement, lorsque l'exploitation des seconds signaux d'image indique que le détecteur (16) était dans l'état de saturation ou de surcharge au cours de la lecture des premières informations d'image (42 ; 46) visant à produire les premiers signaux d'image et qu'il n'était pas dans l'état de saturation ou de surcharge au cours de la lecture des secondes informations d'image (45 ; 49) visant à produire les seconds signaux d'image.

6. Dispositif selon la revendication 5, **caractérisé en ce que** le dispositif de commande (10) est conçu de manière à déterminer une troisième dose d'effacement, supérieure à la deuxième dose d'effacement, lorsque l'exploitation des seconds signaux d'image indique que le détecteur (16) était dans l'état de saturation ou de surcharge au cours de la lecture des secondes informations d'image (45 ; 49) visant à produire les seconds signaux d'image.

7. Dispositif selon l'une des revendications 1 à 6, **caractérisé en ce qu'**un sens (T) du premier mouvement relatif est opposé à un sens (R) du second mouvement relatif.

8. Dispositif selon l'une des revendications 1 à 7, **caractérisé en ce que** le dispositif de commande (10) est conçu de manière à faire passer les premiers signaux d'image et/ou les seconds signaux d'image, au moyen d'une transformée de Fourier, dans un domaine fréquentiel et à les soumettre dans le domaine fréquentiel à un traitement supplémentaire.

9. Dispositif selon la revendication 8, **caractérisé en ce que** le traitement supplémentaire comprend un filtrage, notamment un filtrage faisant appel à un filtre passe-bas.

10. Dispositif selon la revendication 8 ou 9, **caractérisé en ce que** le dispositif de commande (10) est conçu de manière à faire repasser dans le domaine spatial les premiers signaux d'image et/ou seconds signaux d'image ayant subi la transformée de Fourier et le traitement supplémentaire et à superposer les premiers signaux d'image et les seconds signaux d'image.

11. Dispositif selon l'une des revendications 1 à 10, **caractérisé en ce que** le dispositif de commande (10) est conçu de manière à exploiter les premiers signaux d'image pour savoir s'ils présentent au moins une zone dans laquelle le détecteur (16) était dans l'état de saturation ou de surcharge au cours de la lecture des premières informations d'image (40 ; 42 ; 46) visant à produire cette au moins une zone des premiers signaux d'image, et à utiliser au moins une zone des seconds signaux d'image pour remplacer l'au moins une zone des premiers signaux d'image.

12. Système comportant un dispositif (1) selon l'une des revendications précédentes et un détecteur (16) destiné à détecter le rayonnement d'émission (15) émis par la couche d'enregistrement luminescente (4) au cours de la lecture des informations d'image.

13. Système selon la revendication 12, **caractérisé en ce qu'**il dispose d'une couche d'enregistrement luminescente (4).

14. Procédé d'effacement d'une couche d'enregistrement luminescente (4) au moyen d'un rayonnement d'effacement, dans lequel
- le rayonnement d'effacement est produit et émis par une source de rayonnement (9), et
- une dose d'effacement du rayonnement d'effacement est déterminée en fonction des informations d'image (40 ; 42, 45 ; 46, 49) d'une image radiographique (41 ; 43 ; 47) enregistrée dans la couche d'enregistrement luminescente (4), les informations d'image (40 ; 42, 45 ; 46, 49) ayant préalablement été lues à partir de la couche d'enregistrement luminescente (4), **caractérisé en ce que**
un dispositif d'entraînement (8) relié à un dispositif de commande (10) produit un mouvement relatif entre la couche d'enregistrement luminescente (4) et un détecteur (16) et **en ce que** le dispositif de commande (10) commande le dispositif d'entraînement (8) destiné à produire un premier et un second mouvement relatif en vue de produire des premiers et seconds signaux d'image, les premiers et seconds signaux d'image représentant des premières et secondes informations d'image relatives à l'image radiographique respectivement lue à partir de la couche d'enregistrement luminescente (4), et il soumet les premiers signaux d'image et/ou les seconds signaux d'image à un filtrage local moyennant lequel le dispositif de commande (10) modifie des valeurs de signaux d'image de points d'image des premiers signaux d'image ou des seconds signaux d'image en fonction des valeurs de signaux d'image de points d'image voisins, et superpose les premiers signaux d'image et seconds signaux d'image qui, le cas échéant, ont subi un filtrage local.
